Europäisches Patentamt

European Patent Office

Office européen des brevets

(11) Veröffentlichungsnummer: **0 606 866 A1**

(12) **EUROPÄISCHE PATENTANMELDUNG**

(21) Anmeldenummer: **94100230.5**

(51) Int. Cl.⁵: $B27K\ 9/00$

(22) Anmeldetag: **10.01.94**

(30) Priorität: **12.01.93 DE 4300555**

(43) Veröffentlichungstag der Anmeldung:
**20.07.94 Patentblatt 94/29**

(84) Benannte Vertragsstaaten:
**BE DE ES FR GB IT NL**

(71) Anmelder: **Schmidmeier, Alexander**
**II. Kelud 69,**
**Tewang Wates,**
**Kediri**
**ID-64147 Jatim(ID)**

(72) Erfinder: **Schmidmeier, Alexander**
**II. Kelud 69,**
**Tewang Wates,**
**Kediri**
**ID-64147 Jatim(ID)**

(74) Vertreter: **Alber, Norbert et al**
**Patent- und Rechtsanwälte**
**Hansmann Vogeser Dr. Boecker Alber Dr.**
**Strych**
**Albert-Rosshaupter-Strasse 65**
**D-81369 München (DE)**

(54) **Verfahren zur Verhinderung des Reissens von Bambusrohren (chemisch).**

(57) Die Erfindung betrifft ein chemisches Verfahren zur Behandlung von Bambusrohren, um die Rißbildung der Bambusrohre zu verhindern. Die Aufgabe der Erfindung besteht darin, ein Verfahren zu schaffen, mit dem die Rißbildung bedingt durch die Verdunstung des Feuchtegehaltes der zu trocknenden Bambusrohre soweit wie möglich unterbunden wird, ohne daß hierbei primär mechanische Maßnahmen eingesetzt werden. Daher wird vorgeschlagen, daß das Bambusrohr vor dem Trocknen mit einer Flüssigkeit getränkt wird, die das im Bambus eingeschlossene Wasser ersetzt und schwerer flüchtig ist als Wasser.

EP 0 606 866 A1

Bambusrohre werden in Asien und zunehmend auch in Europa als Konstruktionsmittel verwendet und nach Europa beispielsweise in Form von Sitzmöbeln oder Betten importiert, die aus Bambusrohren bestehen.

Dabei besteht das grundsätzliche Problem, daß Bambusrohre nach dem Abernten durch Verdunstung ihren Feuchtegehalt verringern und dadurch - ebenso wie heimisches Massivholz - aufgrund des ungleichmäßig einsetzenden Schrumpfungs-Prozesses Risse bekommt. Dies ist wirtschaftlich besonders nachteilig, wenn diese Risse erst nach der Erstellung der Möbel auftreten, doch auch bereits vor dem Verbauen der Bambusstangen tritt hierdurch ein hoher Rohstoff-Verlust ein.

Zwar kann das Maß der Schrumpfung und damit der Rißbildung minimiert werden, indem vorzugsweise mindestens fünfjährige Bambusrohre verwendet werden und zuzätzlich bevorzugt solcher Bambus eingesetzt wird, der auf kargen Böden gewachsen ist und in der Trockenzeit geerntet wurde. Ganz auszuschließen ist die Rißbildung dennoch nie.

Es sind mechanische Verfahren bekannt, bei denen vor dem Einsetzen der Trocknung bzw. dem aktiv eingeleiteten Trocknungsprozeß die Bambusrohre in Längsrichtung aufgeschnitten werden, und die Querwände des Bambus, die sogenannten Knoten, durchbohrt oder vorzugsweise weitestgehend entfernt werden.

Bei der anschließenden Trocknung wird dieser durch den Längsschnitt erzeugte Spalt in der Regel weiter, öffnet sich jedoch oft auch ungleichmäßig. Nach Abschluß des Trocknungsvorganges wird der Spalt zusätzlich durch Fräsen auf eine bestimmte Form und Größe erweitert und ein analog angepaßter Bambusstreifen eingesetzt. Bei einem sauberen Verkleben dieses Bambusstreifens sind die Klebefugen praktisch unsichtbar, vor allem wenn anschließend das Bambusrohr im ganzen überschliffen wird.

Die Verbindung zwischen Bambusstreifen und dem restlichen Bambusrohr erfolgt mittels Verkleben, und eventuell zusätzlich durch mechanische Fixierungsmittel wie Dübel, Nägel, Klammern oder Schrauben. Als vorteilhaft hat sich dabei das Dübeln mit Dübeln aus Bambusholz erwiesen, die beidseits des Bambusstreifens schräg in das Bambusrohr eingebracht werden, so daß es sich jeweils quer über die Klebefuge zwischen Bambusstreifen und Bambusrohr hinwegerstrecken. In Längsrichtung ist der Bambusstreifen dabei meist mehrteilig ausgebildet, jedenfalls dann, wenn sich das Bambusrohr über mehrere Querwände, also Knoten, hinwegerstreckt. Da sich die Knoten nicht in regelmäßigen Abständen befinden, besteht der Bambusstreifen aus Einzelteilen, die jeweils nur einen solchen Ringwulst enthalten.

Weiterhin wird versucht, die ungleichmäßige Schrumpfung dadurch zu egalisieren, daß von den Bambusrohren vor allem die harte und nur schwer wasserdurchlässige Außenhaut entfernt wird, und oft auch die Innenhaut, soweit zugänglich. Das zwischen Außen- und Innenhaut verbleibende Bambus-Material ist in sich weniger stark unterschiedlich als die Außenhaut zum weit innen liegenden Material, so daß auch die Schrumpfung weniger unterschiedlich ausfällt.

Da diese mechanischen Methoden einen relativ hohen Arbeitsaufwand erfordern und die eingesetzten Bambusstreifen nie vollständig unsichtbar sind, besteht die Aufgabe der Erfindung darin, ein Verfahren zu schaffen, mit dem die Rißbildung an zu trocknenden Bambusrohren soweit wie möglich unterbunden wird, ohne daß hierbei primär mechanische Maßnahmen eingesetzt werden.

Bei Massivholz der gängigen Nutzholzarten in Europa und Nord-Amerika, welches ebenfalls bei dem nach dem Schnitt eintretenden Feuchtigkeitsverlust zu starker Rißbildung neigt, sind verschiedene Verfahren auf nicht-mechanischem Wege zur Rißvermeidung bekannt.

Die einfachste Methode zur Erzeugung nicht reißender Flächen und Platten besteht darin, einzelne Massivholzschichten übereinander so zu verkleben, daß sich die Faserrichtungen kreuzen und dadurch die eine Schicht durch die angrenzenden, quer verlaufenden Schichten, am Reißen gehindert wird.

Auch das Kammertrocknen mit gesteuerter Feuchtigkeitsabnahme ist bekannt, kann die Rißbildung jedoch niemals vollständig vermeiden.

Alle vom Massivholz her bekannten Methoden sind auf Bambus jedoch nicht anwendbar, da er sich aufgrund eines anderen konstruktiven Aufbaues und anderer chemischer Zusammensetzung völlig anders verhält als Massivholz:

Abgesehen davon, daß Bambus keine Holzart ist, sondern ein Riesengras der Graminae-Familie, enthält Bambus das spezielle Graslignin und z.B. und über 60% Zellulose.

Weiterhin leitet Stammholz das Wasser vor allem in seinen Außenbereichen knapp unter der Rinde, sodaß beim Trocknen genau dort die größten Spannungen auftreten. Beim Bambus dagegen befinden sich die Leitzellen und Speicherzellen für Wasser vor allem im inneren Querschnittsbereich, während weiter außen die weniger Feuchtigkeit enthaltenden Stützzellen liegen.

Im Gegensatz zu Holz beginnt Bambus nicht erst nach der Abgabe des freien Wassers, also bei Feuchtigkeitswerten unter dem Fasersättigungsbereich, der bei Bambus auch niedriger liegt, zu schrump-fen, sondern bereits vorher.

2

Speziell für Bambusrohre wird die gestellte Aufgabe durch die kennzeichnenden Merkmale der Ansprüche 1 und 2 gelöst.

Vorteilhafte Ausführungsformen ergeben sich aus den Unteransprüchen.

Der Effekt der Chemikalien, die entweder als Platzhalter des vorher in den Pflanzenzellen beinhalteten Wassers dienen, oder solches Wasser erst aus der Umgebungsfeuchtigkeit anziehen, besteht darin, die während des Wachstums für das Wasser in der Pflanzenstruktur vorhandenen Hohlräume auch nach dem Ernten der Bambusrohre auszufüllen und dadurch eine Schrumpfung des Bambus-Korpus zu vermeiden oder so gering zu halten, daß eine Rißbildung vermieden wird.

Wichtig ist dabei, daß nur mindestens 5 Jahre alte Rohre benutzt werden, und bei der Ernte die unteren 1 bis 2 Meter stehengelassen werden. Nach dem Ernten muß die chemische Behandlung möglichst bald beginnen, da nach einem zu weit gehenden Eintrocknen der Kapillaren ein erneutes Eindringen von Flüssigkeit, und damit eine chemische Behandlung, nur unvollkommen stattfindet.

Ausgehend von einer Feuchtigkeit des Bambusrohres während der Wachstumsphase von etwa 50 bis 100%, je nach axialer und radialer Stelle, ist ein Trocknen auf eine Restfeuchtigkeit von 8 bis 10 % notwendig, wenn dieses Bambus ohne Probleme in europäischen Klimaverhältnissen, und insbesondere in klimatisierten und zentralbeheizten Räumen, eingesetzt werden soll.

Das Bambusrohr wird daher entweder mit einer Flüssigkeit getränkt, die das eingeschlossene Wasser ersetzt, jedoch schwerer flüchtig ist als Wasser, so daß diese Flüssigkeit beim Durchlaufen des Trocknungsvorganges in der Bambusstruktur vorhanden bleibt.

Ebenso ist das Tränken des Bambus mit einer Flüssigkeit möglich, die nicht vollständig das dort vorher beinhaltete Wasser verdrängt, aber so stark hygroskopisch ist, daß diese hygroskopischen Kräfte stärker sind als der Dampfdruck des während des Trocknungsvorganges normalerweise verdunstenden Wassers.

Selbstverständlich können die eingesetzten Flüssigkeiten auch Mischungen aus solchen Wirkstoffen enthalten, also insbesondere Mischungen von Wirkstoffen, die das Wasser nur ersetzen und schwerer flüchtig sind, als Wasser und andererseits Wirkstoffen, die stark hygroskopisch sind.

Zusätzlich kann die Flüssigkeit Bestandteile enthalten, die einen Insektenbefall oder ein Schimmeln des Bambus verhindern.

Selbst wenn nur eine chemische Behandlung vorgenommen wird, empfiehlt es sich, die Außenhaut und eventuell auch die Innenhaut des Bambus zu entfernen und die Querwände zumindest zu durchbohren, um ein gutes Eindringen der Flüssigkeit in das Bambusrohr zu gewährleisten. Weiterhin erfolgt zunächst, insbesondere vor dem Häuten, ein Wässern des Bambus über etwa fünf Tage, um die Kapillare zu reinigen und mit reinem Wasser zu füllen. Gleichzeitig wird dabei bereits Lignin ausgeschieden, wodurch Platz für die spätere Aufnahme der Chemikalien geschaffen wird. Anschließend werden die Rohre vorzugsweise nochmals zumindest außen gründlich gereinigt, um ein Verschmutzen des anschließenden Chemikalienbades so gering wie möglich zu halten.

Das Chemikalienbad selbst hat Umgebungsdruck und wird bei einer Badtemperatur von 40° bis 55°, vorzugsweise bei 45°C; gehalten, wobei die Einwirkdauer zwei bis sechs Tage, vorzugsweise vier bis fünf Tage beträgt.

Als Wirkstoff zum Ersetzen des Wassers im Bambus ist beispielsweise Polyethylenglykol mit einem Molekulargewicht von 600, 1000 oder 1.500 geeignet, oder andere schwer flüchtige Flüssigkeiten, die keine nachteiligen Auswirkungen auf das Fasermaterial des Bambus haben.

Als hygroskopische Wirkstoffe haben sich Harnstoff oder Sorbitol (eine Sobritlösung) bewährt.

Dabei ist es auch von Bedeutung, daß die Rohre möglichst frisch nach dem Ernten, also noch bevor eine wesentliche Austrocknung eingesetzt hat, in das Wässerungsbad und anschließend das Chemikalienbad gegeben werden, um die Kapilare offenzuhalten.

Selbstverständlich kann die Einwirkzeit des Chemikalienbades reduziert werden, indem die Einwirktemperatur, vor allem der Druck erhöht werden, jedoch steigt dadurch der notwendige technische Aufwand.

Die Einwirkzeit insgesamt ist natürlich auch von der Wandstärke des Bambus und von seiner Länge abhängig, da vor allem in Längsrichtung Chemikalien eindringen, und damit ein direkter Zusammenhang zwischen Sättigungszeit und Länge des Bambusrohres besteht.

Als besonders vorteilhafte Mischungen hat sich ein Gemisch von etwa 49,5 % Polyethylenglykol, 49,5 % Wasser und 1 % Borsalz als Grundmischung erwiesen, die durch zusätzlich eingegebenes Soda auf einen PH-Wert von 8 gebracht wird. Das Soda dient dabei der Schimmelverhinderung, während die Bohrsäure den Insektenbefall verhindert. Die Einhaltung der Zusammensetzung muß in Zeitabständen von ca. 1 Tag kontrolliert und ggfs. korrigiert werden.

Diese sowie alle anderen Prozentangaben in der vorliegenden Anmeldung sind als Gewichts-% zu verstehen.

Bei obiger Mischung - wenn PEG 600 eingesetzt wird - ist der Zusammenhang zwischen Wandstärke, Rohrlänge und Verweildauer im Bad bei 5 Jahre alten Rohren der Art Dendrocalamus asper, die 5 Tage vorgewässert und außen geschält wurden, sowie deren Astansätze künstlich mit einem Stechbeitel vertieft wurden, wie folgt. Dabei sind die Verweildauer in Stunden angegeben, und Rohre über 3m Länge und 2,5 cm Wandstärke werden aufgrund zu starker Rißneigung im Möbelbau nicht verwendet.

Dabei wird von einem Mittelwert von einem Knoten (Querwand) alle 40 bis 50 cm ausgegangen. Deutlich mehr oder weniger Knoten sind dabei wie eine größere Rohrlänge zu behandeln:

## Rohrlänge (cm)

| Wandstärke: (cm) | Verweildauern: | | | | | |
|---|---|---|---|---|---|---|
| | bis 50 | -100 | -150 | -200 | -250 | -300 |
| 0,5 - 1,0 | 48 | 61 | 75 | 89 | 104 | 120 |
| 1,0 - 1,5 | 51 | 65 | 80 | 95 | 111 | 128 |
| 1,5 - 2,0 | 55 | 70 | 86 | 102 | 119 | 137 |
| 2,0 - 2,5 | 58 | 73 | 89 | 106 | 124 | 144 |

Bei sinkender PEG-Konzentration würde die Verweildauer ansteigen. Wird statt dessen PEG 1000 verwendet, muß die Temperatur statt bei 42° bis 48 °C um 10°C höher gehalten werden aufgrund der geringeren Viskosität von PEG 1000, und für PEG 1500 um weitere 10°C. Damit ist auch die Obergrenze der Temperatur von 65°C erreicht.

Nach dieser Tauchbadbehandlung wird der Bambus zunächst langsam im Freien unter Vermeidung direkter Sonnenbestrahlungmöglichst aufrecht stehend, bis auf den Feuchtegehalt der Fasersättigung, etwa 25 % Feuchtigkeitsgehalt, getrocknet und erst danach der Kammertrocknung bis auf die Endfeuchte von 8 bis 10 % unterworfen.

Anstelle des Polyethylenglykols ($HOCH_2$ ($CH_2OCH_2$)$nCH_2OH$)) kann auch Harnstoff (Urea) in gleichem Mischungsverhältnis eingesetzt werden. Als hygroskopische Substanzen werden Borax ($NA_2B_4O_4$), Soda oder Borsäure bzw. Mischungen hieraus eingesetzt. Der Wirkstoff bzw. die Wirkstoffmischung liegt dabei in 4 bis 8%iger Lösung in Wasser vor. Bei Borax-Konnzentrationen unter 4% wirkt das Borax dabei nur noch gegen Insektenbefall, nicht gegen das Reißen.

Zusätzlich oder auch statt dessen ist eine Oberflächenbehandlung der Bambusrohre innen und/oder außen mit Ölen, vorzugsweise mit Leinöl, erfolgreich, wodurch die Verdunstung des im Plfanzenstoff vorhandenen Wassers so stark verlangsamt wird, daß ein Spannungsausgleich größtenteils möglich ist und damit eine Rißbildung vermieden wird. Nachteilig ist jedoch, daß auf diese Art und Weise eine andere Oberflächenbeschichtung mittels Lack, Beize oder ähnlichem nicht mehr haltbar auf der geölten Bambusoberfläche ist.

Dagegen läßt sich nach der chemischen Behandlung sehr gut eine gesteuerte Innentrocknung des Bambusrohres einsetzen, bei der der Innenraum des Bambusrohres von warmer, trockener Luft durchströmt wird und dadurch die Innenbereiche des Bambusrohres schneller trocknen als die Außenbereiche. Da gerade die Innenbereiche des Bambusrohres mehr Kapillare und damit mehr Feuchtegehalt besitzen als die Außenbereiche und somit zumindest im Außenbereich der Rohre die Rißbildung verringert, wenn nicht gar vollständig aufgehoben wird.

Besonders vorteilhaft ist dabei die Steuerung der Innentrocknung nach Durchströmungsvolumen, Temperatur und eventuell auch Feuchtegehalt der durchströmenden Luft in Abhängigkeit von direkt am zu trocknenden Bambus individuell gemessenen Parametern wie Feuchtegehalt auf der Innenfläche und der Außenfläche, Spannung auf der Innen- und auf der Außenseite etc., die durch angelegte Sonden zu ermitteln wäre.

**Patentansprüche**

1. Verfahren zum Verhindern der Rißbildung von zu trocknenden Bambusrohren mit geschlossenem Querschnitt,
   **dadurch gekennzeichnet, daß**
   das Bambusrohr vor dem Trocknen mit einer Flüssigkeit getränkt wird, die das im Bambus eingeschlossene Wasser ersetzt und schwerer flüchtig ist als Wasser.

2. Verfahren zum Verhindern der Rißbildung von zu trocknenden Bambusrohren mit geschlossenem Querschnitt,
   **dadurch gekennzeichnet, daß**
   das Bambusrohr vor dem Trocknen mit einer Flüssigkeit getränkt wird, die stark hygroskopisch ist.

3. Verfahren nach einem der vorhergehenden Ansprüche,
   **dadurch gekennzeichnet, daß**
   die Flüssigkeit als Wirkstoff Polyethylenglykol mit einem Molekulargewicht von 600, 1000 oder 1.500 enthält.

4. Verfahren nach einem der vorhergehenden Ansprüche,
   **dadurch gekennzeichnet, daß**
   die Flüssigkeit als Wirkstoff Harnstoff enthält.

5. Verfahren nach einem der vorhergehenden Ansprüche,
   **dadurch gekennzeichnet, daß**
   die Flüssigkeit als Wirkstoff Sorbitol enthält.

6. Verfahren nach einem der vorhergehenden Ansprüche,
   **dadurch gekennzeichnet, daß**
   die Bambsusstangen in ein Tauchbad mit der Flüssigkeit eingebracht werden, solange sie wenigstens einen Feuchtigkeitsgehalt aufweisen, der annähernd der Wachstumsfeuchtigkeit entspricht und das Tauchbad zwischen 40 und 50° C Temperatur sowie Umgebungsdruck aufweist.

7. Verfahren nach einem der vorhergehenden Ansprüche,
   **dadurch gekennzeichnet, daß**
   das Bambusrohr vor der Behandlung mit der FLüssigkeit mehrere Tage, insbesondere fünf Tage lang gewässert wird.

8. Verfahren nach Anspruch 7,
   **dadurch gekennzeichnet, daß**
   das Bambusrohr nach dem Wässern und vor dem Behandeln mit der FLüssigkeit innen und außen mechanisch gereinigt wird.

9. Verfahren nach Anspruch 7 oder 8,
   **dadurch gekennzeichnet, daß**
   vor der Behandlung mit der Flüssigkeit die Außenhaut und/oder die Innenhaut des Bambus entfernt wird.

10. Verfahren nach einem der vorhergehenden Ansprüche,
    **dadurch gekennzeichnet, daß**
    die Querwände des Bambus vor dem Einwirken der Flüssigkeit jeweils wenigstens teilweise entfernt werden.

11. Verfahren nach einem der vorhergehenden Ansprüche,
    **dadurch gekennzeichnet, daß**
    die Flüssigkeit minderanteilig Komponenten enthält, die einen Schimmelbefall und/oder Insektenbefall des Bambus verhindert.

12. Verfahren nach einem der vorhergehenden Ansprüche,
**dadurch gekennzeichnet, daß**
die Flüssigkeit etwa gleich viel Wirkstoff und Wasser enthält, sowie etwa 1 % Borsäure als Zweitwirkstoff in der Ausgangsmischung, und diese Ausgangsmischung durch Zugabe von Soda, bis 1 PH-Wert von etwa 8 erreicht ist, zur Flüssigkeit aufgefüllt wird.

13. Verfahren nach einem der vorhergehenden Ansprüche,
**dadurch gekennzeichnet, daß**
nach der Behandlung des Bambus durch die Flüssigkeit das Bambus einer langsamen Lufttrocknung ohne direkte Sonneneinstrahlung bis auf einen Feuchtigkeitsgehalt von etwa 25% unterzogen wird und anschließend einer Kammertrocknung bis auf einen Feuchtigkeitsgehalt von 8 bis 10 % unterworfen wird.

14. Verfahren nach einem der vorhergehenden Ansprüche,
**dadurch gekennzeichnet, daß**
als Wirkstroff Borax, Soda und/oder Borsäure verwendet wird.

15. Verfahren nach Anspruch 14,
**dadurch gekennzeichnet, daß**
die Flüssigkeit eine 2 bis 10%ige wässrige Lösung des Zweitwirkstoffes enthält.

16. Verfahren nach Anspruch 14,
**dadurch gekennzeichnet, daß**
die Flüssigkeit eine 4 bis 8%ige wässrige Borax-Lösung mit zusätzlichen Nebenbestandteilen von insgesamt weniger als 5% ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | PATENT ABSTRACTS OF JAPAN vol. 015, no. 386 (M-1163)30. September 1991 & JP-A-03 156 281 (TAKAHASHI HIDEAKI) 4. Juli 1991 * Zusammenfassung * --- | 1-3,6-10 | B27K9/00 |
| X | DATABASE WPI Week 8117, Derwent Publications Ltd., London, GB; AN 81-29639D & JP-A-56 021 808 (KANAGAWA-KEN) 28. Februar 1981 * Zusammenfassung * --- | 1-3,6-10 | |
| X | DATABASE WPI Week 8035, Derwent Publications Ltd., London, GB; AN 80-61908C & SU-A-709 358 (VORON WOOD TECHNOL) * Zusammenfassung * --- | 1,2,4, 6-10 | |
| X | CHEMICAL ABSTRACTS, vol. 72, no. 26, 29. Juni 1970, Columbus, Ohio, US; abstract no. 134331d, CACERES ROJAS, HERNAN 'Preservation of bamboo cane. II. Fire-proofing' * Zusammenfassung * & TECNOLOGIA, 11(60), 26-34 1969 --- | 1,2,4, 6-15 | RECHERCHIERTE SACHGEBIETE (Int.Cl.5) B27K |
| A | ARNO P. SCHNIEWIND 'Concise encyclopedia of wood and wood-based materials , page 16-17' 1989 , PERGAMON PRESS , OXFORD --- | 1-15 | |

-/--

Der vorliegende Recherchenbericht wurde für alle Patentansprüche erstellt

| Recherchenort | Abschlußdatum der Recherche | Prüfer |
|---|---|---|
| DEN HAAG | 30. März 1994 | Dalkafouki, A |

European Patent
Office

## ⊠ CLAIMS INCURRING FEES

The present European patent application comprised at the time of filing more than ten claims.

☐ All claims fees have been paid within the prescribed time limit. The present European search report has been drawn up for all claims.

⊠ Only part of the claims fees have been paid within the prescribed time limit. The present European search report has been drawn up for the first ten claims and for those claims for which claims fees have been paid.

namely claims:      11,12,13,14,15

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions.

namely:

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims.

namely claims:

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | FOREST PRODUCTS JOURNAL Bd. 9 , 1959 , N.YORK Seiten 375 - 381 A.J.STAMM 'Effect of polyetyleneglycol on the dimensional stability of wood' --- | 1-15 | |
| A | DE-A-25 35 190 (DESOWAG-BAYER) * das ganze Dokument * ----- | 11-15 | |

RECHERCHIERTE
SACHGEBIETE (Int.Cl.5)

Der vorliegende Recherchenbericht wurde für alle Patentansprüche erstellt

| Recherchenort | Abschlußdatum der Recherche | Prüfer |
|---|---|---|
| DEN HAAG | 30. März 1994 | Dalkafouki, A |